# EUROPEAN PATENT SPECIFICATION

(11) **EP 1 007 452 B1**
(45) Date of publication and mention of the grant of the patent: **27.08.2003**
(21) Application number: 98912162.9
(22) Date of filing: 13.03.1998
(51) Int. Cl.: B65G 47/14, B65G 25/08

(54) **CONVEYOR APPARATUS**
FÖRDEREINRICHTUNG
DISPOSITIF TRANSPORTEUR

(30) Priority: 13.03.1997 CA 2199885
(43) Date of publication of application: 14.06.2000
(73) Proprietor: Maxi-Tour Inc., Vanier, Québec G1M 2E4 (CA)
(72) Inventor: DUSSAULT, Jacques, Vanier, Quebec G1M 2E4 (CA)
(74) Representative: Gallafent, Antony Xavier
(86) International application number: CA9800217
(87) International publication number: WO98040293

(56) References cited:
- CA-A- 1 277 682
- DE-U- 29 518 407
- FR-A- 2 120 000
- US-A- 5 257 688
- US-A- 5 374 157
- US-A- 5 653 570

## Description

This invention is concerned with apparatus for raising products or people from a receiving location to a delivery location. More particularly, it is concerned with a so-called step feeder. Such devices are commonly used in saw mills to raise sawlogs and trees from a receiving location and deliver them, one by one, to a delivery location from where they are advanced for further processing. It will be apparent from what follows that while the present invention is extremely well suited for this environment, it also may be used to transport many different kinds of products or even as an escalator.

United States Patent 5,351,729 (Brisson) describes a typical step feeder which has a fixed set of "stairs" which comprise a plurality of inclined plates disposed in spaced vertical planes and extending from a receiving location, upwardly to a delivery station. Movable plates are supported between the plates of the stairs on swinging levers driven by a motor and crank arrangement to lift logs from one tread of the stairs to the next.

Another step feeder is described in United States Patent 5,374,157 (Allard). It has two sets of movable stairs each comprising a plurality of inclined plates disposed in spaced vertical planes. A first set of stairs is mounted on swinging levers driven by a motor and crank arrangement. The second set of stairs is also mounted on swinging levers. The second set of stairs is driven through meshing gear segments on them and on the levers of the first set of stairs. in this way, the two sets of stairs reciprocate between each other to pass a log from the tread of one set to the next rising tread of the other set and in the process the logs are unscrambled.

These devices are slow and cumbersome. The present invention seeks to provide a step feeder which is smooth and fast in operation.

A device according to the preamble of claim 1 is described in DE-U- 195 18 407.

According to the present invention there is provided a device for moving elements from a receiving location to a delivery location, the device comprising:
a frame;
a first and second set of moveable stairs mounted on rectilinear, inclined bearings, within the frame;
a rocker assembly comprising a central axis and first and second pivot spaced therefrom;
the first pivot being connected to the first set of stairs and the second pivot being connected to the second set of stairs;
characterised in that the rocker assembly is connected to a crank assembly driven by a motor; and
the rocker assembly is disposed underneath the first and second set of stairs intermediate the receiving location and the delivery location, such that a portion of the weight of the first and second set of
stairs is disposed forwardly of the position of the
rocker assembly and the remainder of the weight of the
first and second set of stairs is disposed rearwardly of the position of the rocker assembly.

Further preferred features of the present invention are defined in the claims.

An embodiment of the invention is illustrated in the accompanying drawings in which:
Figure 1 is a schematic side view of a step feeder according to this invention;
Figure 2 is a side view of the transport members or stairs of the device in Figure 1;
Figure 3 is a plan view of the device of Figure 1;
Figure 4 is a side view of one of the two sets of transport members or stairs;
Figure 5 is a side view and a plan view of the other of the sets of stairs;
Figure 6 is a side view of the frame of the device of Figure 1; and
Figure 7 is an end view of a part of the device of Figure 1.

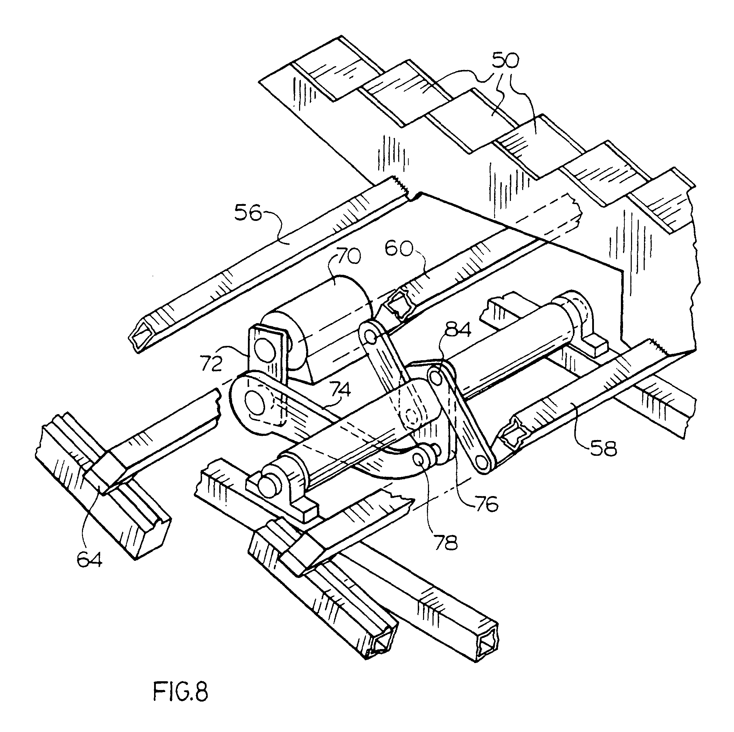

Figure 8 is a perspective view of the drive linkage of the feeder; and

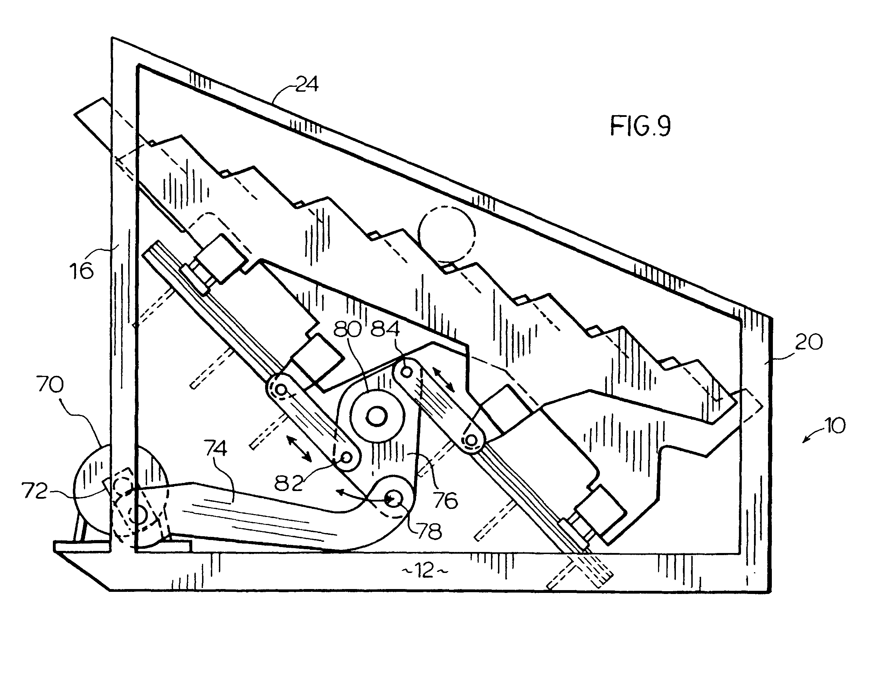

Figure 9 is a simplified side view of the feeder mechanism.

The device comprises a frame 10 having longitudinal lower frame elements 12 connected by transverse frame elements 14. Tall columns 16 are connected to the lower frame at the delivery end 18 of the frame. Shorter columns 20 are connected to the receiving end 22 of the lower frame.

The upper ends of the columns 16 and 20 are joined by inclined beams 24. Frame elements 26, parallel to the beams 24 extend between the receiving and delivery ends of the frame. The sides of the frame are closed by panels 28.

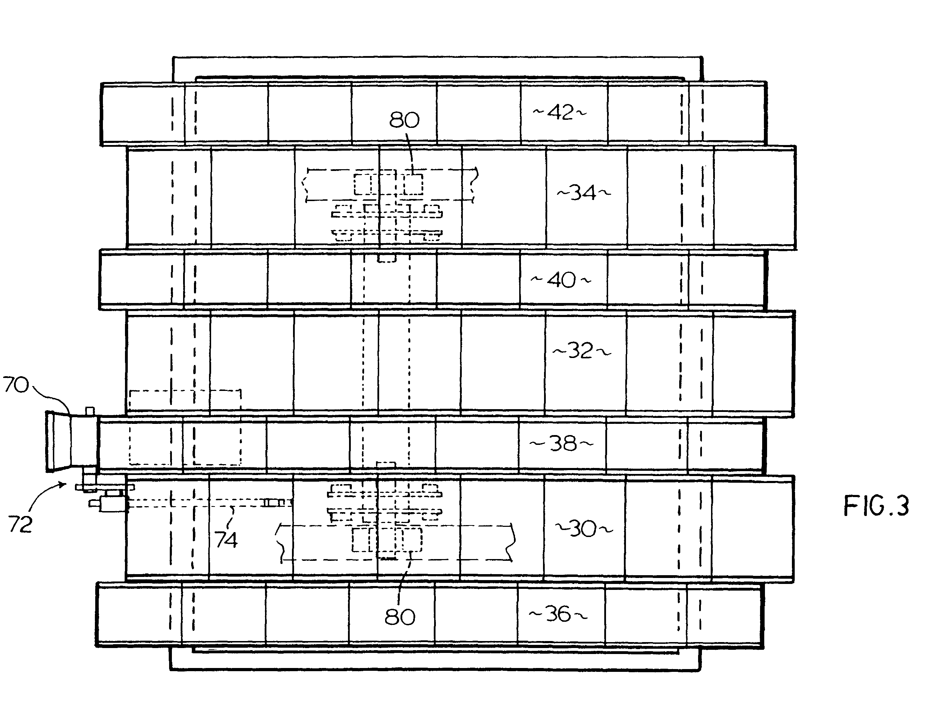

The transport members comprise two sets of stairs. The first set is in three separate segments 30, 32 and 34 as seen in figure 3. The second comprises four segments at 36, 38, 40 and 42 in figure 3.

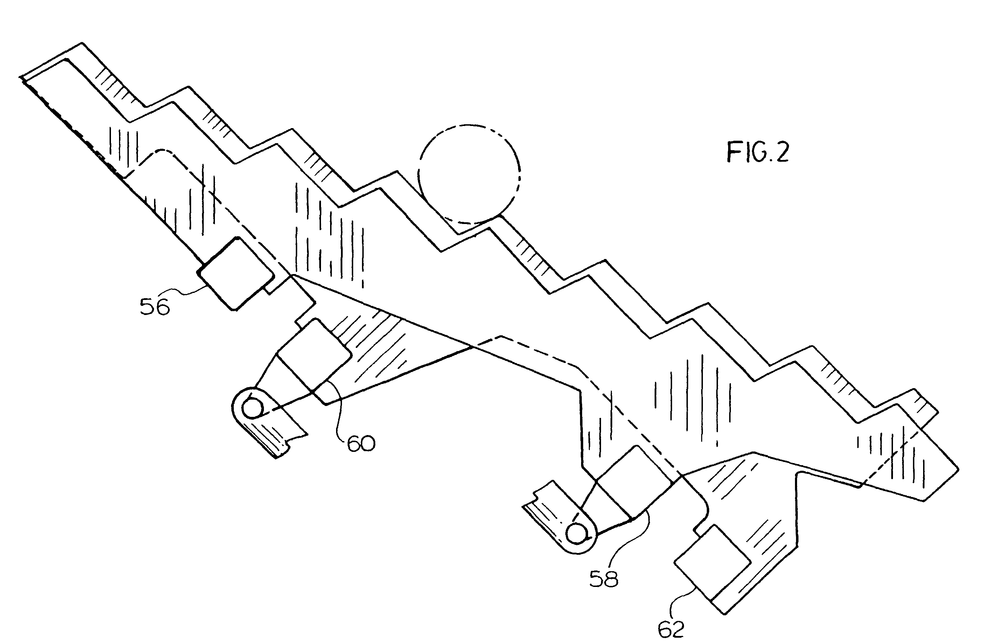

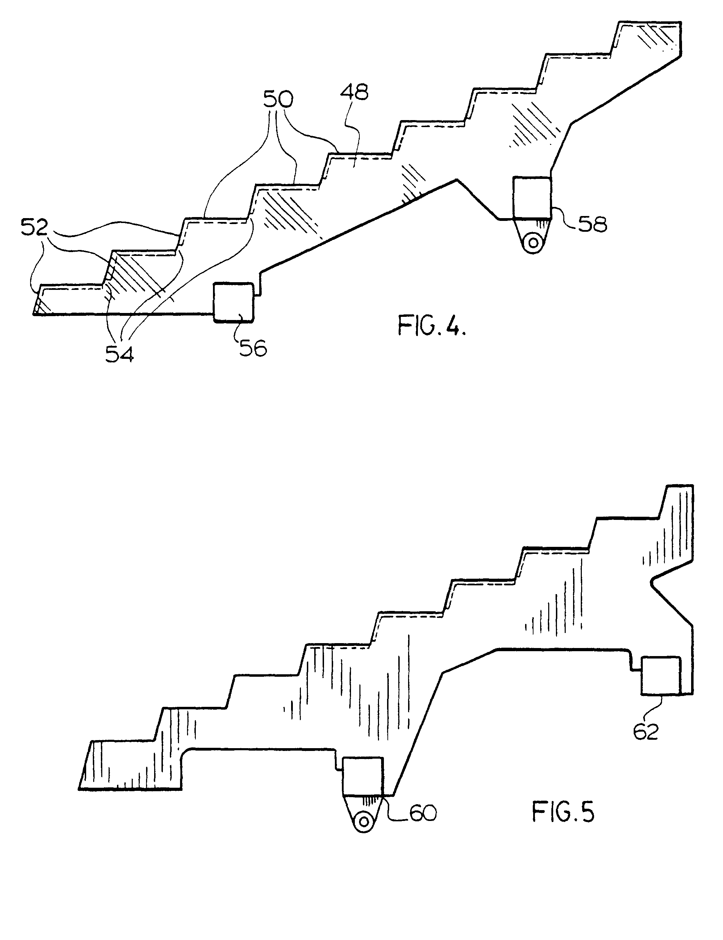

One of the segments of the first set is illustrated in figure 4. It comprises a pair of spaced stringers, one of which is visible at 48 joined by "tread" portions 50 and "riser" portions 52. The tread portions each have transverse slots 54 permitting drainage. The segments of the set of stairs are joined by upper and lower beams 56 and 58 connected to the stringers of the segments. The second set of stairs of which one segment is illustrated in figure 5 is largely similar to the first set being made up of four segments. The segments are joined by beams 60 and 62. The relative positions of the two sets of stairs are illustrated in figure 2.

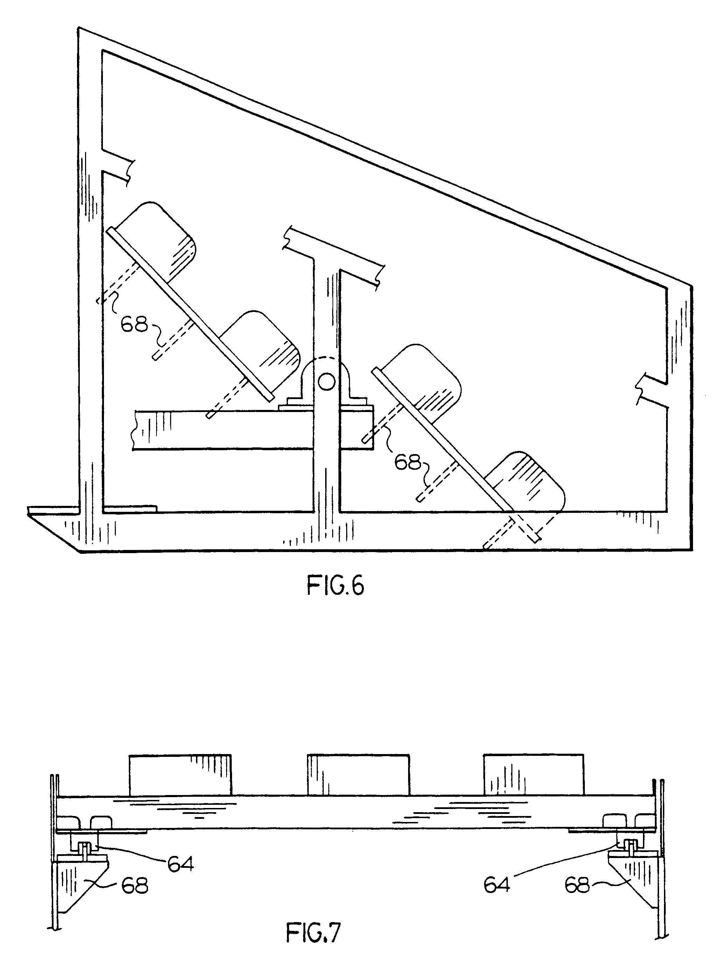

Below the stairs there are two parallel, rectilinear bearings at 64 and 66 mounted by fillets 68 connected to the side walls 28 of the frame. The bearings are illustrated in figure 7. The two sets of stairs are mounted for reciprocating sliding movement on the bearings.

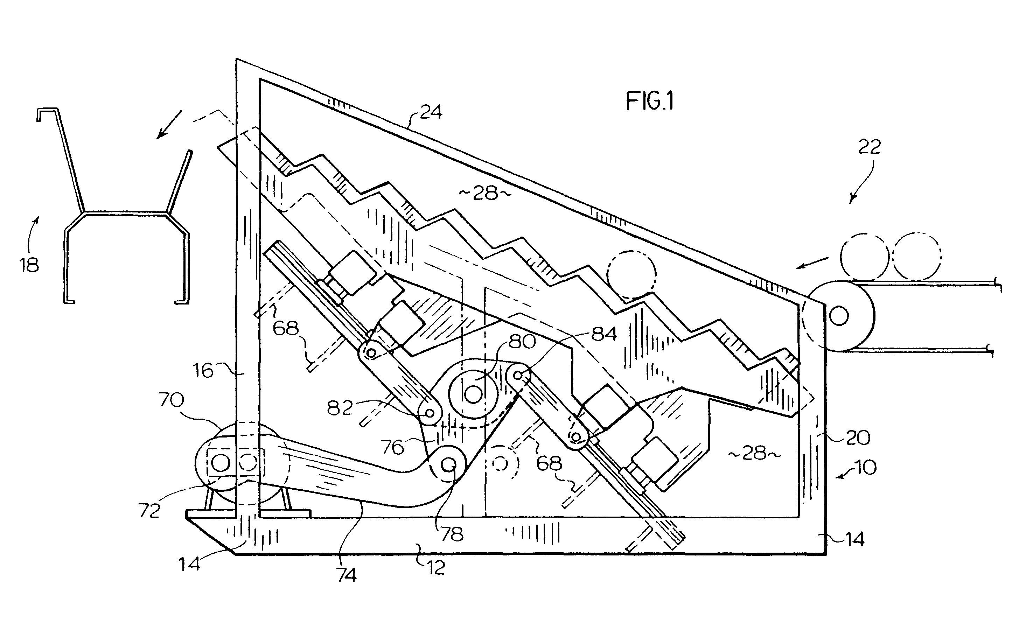

The drive comprises a motor 70 mounted in the frame and having a reducing gear and crank assembly 72. A connecting arm 74 is pivotally mounted on the crank for movement over the limits indicated in chain-lines in figure 1.

The end of the connecting arm is pivotally mounted to a rocker assembly 76 at pivot 78 and the rocker assembly is mounted in bearings 80 mounted in the frame. The rocker assembly has two pivots 82 and 84, equidistantly spaced from its axis, by which it is connected to the sets of stairs. Thus as the rocker arm moves in one direction, it moves on set of stairs upwardly on the bearings 64 and 66 and the other set downwardly. It is important to note that at the mid point of the movements of the rocker assembly, a line connecting the pivots 82 and 84 is at right angles to the bearings 64 and 66. This optimizes the delivery of force to the sets of stairs and reduces the power requirement.

It will be appreciated that logs delivered along conveyor 90 to the lower or receiving end of the step feeder will fall to the stairs and will be lifted by a rising stair onto the adjacent tread of the other set of stairs and thereafter be carried from step to step to the delivery end 18 and onto a receiver 92.

The treads of the stairs are designed to ensure that they are effective to push the logs to the next step but also to permit logs on the lowermost steps to roll back onto the next following step so that the logs become unscrambled i.e. are carried one to a step and delivered to the receiver one at a time. Since a device such as that of the invention when used in a saw mill must accommodate logs of a range of diameters the treads are designed so that if two of the smallest sized logs are on a single step, the upper one must fall to the next lower step. This clearly is the case with larger logs.

The risers are made to be only a little longer than the maximum diameter of the logs with which the step feeder is to be used so that the spacing between the logs is minimized and more can be carried on the feeder.

It will be appreciated that for smooth, rapid movement, the device must be balanced. The drive and the linear bearings substantially contribute to this end because the acceleration is smoothly sinusoidal. To improve balance further, an odd number of stair segments is used. The segments 30, 32 and 34 are each wider and heavier than the segments 36, 38, 40 and 42. However, the combined width of segments 36, 38, 40 and 42 is equal to the combined widths of the segments 30, 32 and 34 and their combined weight is equal to the combined weight of segments 30, 32 and 34.

Additionally, the lower steps of the stair segments are made stronger and heavier than the others to withstand the impacts of the logs falling from conveyor 90 and those as unscrambling of the logs occurs. This need not be done on the higher parts of the stairs and hence they can be less expensive.

It has been found in testing that the step feeder can operate twice as quickly as known step feeders i.e. can deliver twice as many logs in a given time. It is also extremely reliable in unscrambling the logs for delivery one at a time to the receiver 92.

It is to be appreciated that the specific embodiment illustrated herein is for use in a saw mill or like environment and for use with lumber or timber products. However, clearly the invention has application to the handling of a wide variety of products and in a situation when handling products of fixed size, it can be simplified and made specific to that size of product. It is also apparent that an appropriately modified embodiment can be used as an escalator for use by people and that such an arrangement would represent a much simplified and more power-efficient device than the conventional 'conveyor-belt' escalator.

## Claims

1. A device for moving elements from a receiving location to a delivery location, said device comprising:
a frame (10);
a first set of movable stairs (30, 32,34) and a second set of moveable stairs (36, 38, 40, 42) mounted on rectilinear, inclined bearings (64, 66), within said frame (10);
a rocker assembly (76) comprising a central axis and first and second pivots (84, 82) spaced therefrom;
said first pivot (84) being connected to said first set of stairs (30, 32, 34) and said second pivot (82) being connected to said second set of stairs (36, 38, 40, 42);
**characterised in that** said rocker assembly (76) is connected to a crank assembly (72) driven by a motor (70); and
said rocker assembly (76) is disposed underneath said first (30, 32, 34) and second (36, 38, 40, 42) set of stairs intermediate said receiving location (22) and said delivery location (18), such that a portion of the weight of said first (30, 32, 34) and second (36, 38, 40, 42) set of stairs is disposed forwardly of the position of said rocker assembly (76) and the remainder of the weight of said first (30, 32, 34) and second (36, 38, 40, 42) set of stairs is disposed rearwardly of the position of said rocker assembly (76).

2. A device as defined in claim 1, wherein said first and second pivots (84, 82) are connected to said first (30, 32, 34) and second (36, 38, 40, 42) set of stairs through corresponding first and second linkages, such that the weight of said first set of stairs (30, 32, 34) is transferred to said first pivot (84) via said first linkage causing a first moment about said central axis of said rocker assembly (76) and the weight of said second set of stairs (36, 38, 40, 42) is transferred to said second pivot (82) via said second linkage causing a second moment about said central axis in the opposite direction to said first moment.

3. A device as defined in any preceding claim, wherein said rocker assembly (76) is disposed such that its central axis is horizontal and normal to the direction of the motion of said first (30, 32, 34) and second (36, 38, 40, 42) set of stairs.

4. A device as defined in any preceding claim, wherein the weight of said first set of stairs (30, 32, 34) is substantially equal to the weight of said second set of stairs (36, 38, 40, 42).

5. The device as defined in any preceding claim, wherein each stair comprises first (48) and second stringers spaced apart by a plurality of threads (50), each of said threads (50) being spaced from its neighbour by a riser (52).

6. The device as defined in claim 5, wherein said risers (52) and said threads (50) are connected to each other.

7. The device as defined in claim 5 or 6, wherein said threads (50) and said risers (52) have a flat surface.

8. The device as defined in any of claims 5 to 7, wherein said threads (50) and said risers (52) are flush with said stringers (48).

9. The device as defined in any preceding claim, wherein said first and second pivots (84, 82) are disposed equidistant from said central axis of said rocker assembly (76).

10. A device as defined in claim 9, wherein said first and second pivots (84, 82) are collinear with said central axis of said rocker assembly (76).

11. The device as defined in claim 10, wherein said rocker assembly (76) has one position wherein a line through said first and second pivots (84, 82) is at right angles to said inclined bearings (64, 66).

12. The device as defined in any preceding claim, wherein said inclined bearings (64,66) are slide bearings.

## Patentansprüche

1. Vorrichtung zum Bewegen von Elementen von einem Empfangsort zu einem Abgabeort,
wobei die Vorrichtung enthält:
einen Rahmen (10);
einen ersten Satz bewegbarer Stufen (30, 32, 34) sowie einen zweiten Satz bewegbarer Stufen (36, 38, 40, 42), die auf geneigten Linearlagem (64, 66) innerhalb des Rahmens (10) montiert sind;
eine Kniehebelanordnung (76), welche eine Mittelachse sowie einen ersten und einen zweiten Drehzapfen (84, 82) enthält, die von der Mittelachse beabstandet sind;
wobei der erste Drehzapfen (84) mit dem ersten Satz Stufen (30, 32, 34) und der zweite Drehzapfen (82) mit dem zweiten Satz Stufen (36, 38, 40, 42) verbunden ist;
**dadurch gekennzeichnet, dass** die Kniehebelanordnung (76) mit einer Kurbelanordnung (72), die durch einen Motor (70) angetrieben wird, verbunden ist; und
wobei die Kniehebelanordnung (76) unterhalb des ersten (30, 32, 34) und des zweiten (36, 38, 40, 42) Satzes Stufen, die zwischen dem Empfangsort (22) und dem Abgabeort (18) vorgesehen sind, in der Weise angeordnet ist, dass sich ein Teil des Gewichtes des ersten (30, 32, 34) und des zweiten (36, 38, 40, 42) Satzes Stufen vor der Position der Kniehebelanordnung (76) befindet und dass sich das verbleibende Gewicht des ersten (30, 32, 34) und des zweiten (36, 38, 40, 42) Satzes Stufen hinter der Position der Kniehebelanordnung (76) befindet.

2. Vorrichtung nach Anspruch 1, bei der der erste und der zweite Drehzapfen (84, 82) mit dem ersten (30, 32, 34) und dem zweiten (36, 38, 40, 42) Satz Stufen durch entsprechende erste und zweite Verbindungen in der Weise verbunden sind, dass das Gewicht des ersten Satzes Stufen (30, 32, 34) über die erste Verbindung auf den ersten Drehzapfen (84) übertragen wird, wodurch ein erstes Moment um die Mittenachse der Kniehebelanordnung (76) hervorgerufen wird, und dass das Gewicht des zweiten Satzes Stufen (36, 38, 40, 42) über die zweite Verbindung auf den zweiten Drehzapfen (82) übertragen wird, wodurch ein zweites Moment um die Mittenachse in entgegengesetzte Richtung zu dem ersten Moment hervorgerufen wird.

3. Vorrichtung nach einem der vorstehenden Ansprüche, bei der die Kniehebelanordnung (76) in der Weise angeordnet ist, dass ihre Mittenachse horizontal und senkrecht zu der Bewegungsrichtung des ersten (30, 32, 34) und des zweiten (36, 38, 40, 42) Satzes Stufen verläuft.

4. Vorrichtung nach einem der vorstehenden Ansprüche, bei der das Gewicht des ersten Satzes Stufen (30, 32, 34) im Wesentlichen gleich ist zu dem Gewicht des zweiten Satzes Stufen (36, 38, 40, 42).

5. Vorrichtung nach einem der vorstehenden Ansprüche, bei der jede Stufe eine erste (48) und eine zweite Längsversteifung enthält, die durch mehrere Stufenelemente (50) voneinander beabstandet sind, wobei jedes Stufenelement (50) von seinem benachbarten Stufenelement durch ein Stichelement (52) beabstandet ist.

6. Vorrichtung nach Anspruch 5, bei der die Stichelemente (52) und die Stufenelemente (50) miteinander verbunden sind.

7. Vorrichtung nach Anspruch 5 oder 6, bei der Stufenelemente (50) und die Stichelemente (52) ebene Oberflächen aufweisen.

8. Vorrichtung nach einem der Ansprüche 5 bis 7, bei der die Stufenelemente (50) und die Stichelemente (52) mit den Längsversteifungen (48) fluchten.

9. Vorrichtung nach einem der vorstehenden Ansprüche, bei der der erste und der zweite Drehzapfen (84, 82) äquidistant von der Mittenachse der Kniehebelanordnung (76) angeordnet sind.

10. Vorrichtung nach Anspruch 9, bei der der erste und der zweite Drehzapfen (84, 82) kollinear mit der Mittelachse der Kniehebelanordnung (76) sind.

11. Vorrichtung nach Anspruch 10, bei der die Kniehebelanordnung (76) eine Position aufweist, in der eine Linie durch den ersten und den zweiten Drehzapfen (84, 82) in einem rechten Winkel zu den geneigten Lagern (64, 66) verläuft.

12. Vorrichtung nach einem der vorstehenden Ansprüche, bei der die geneigten Lager (64, 66) Gleitlager sind.

## Revendications

1. Dispositif pour déplacer des éléments d'un emplacement de réception vers un emplacement de livraison, ledit dispositif comprenant :
un cadre (10) ;
un premier ensemble d'escaliers mobiles (30, 32, 34) et un deuxième ensemble d'escaliers mobiles (36, 38, 40, 42) montés sur des supports inclinés rectilignes (64, 66), à l'intérieur dudit cadre (10) ;
un ensemble culbuteur (76) comprenant un axe central et des premiers et deuxième pivots (84, 82) espacés de celui-ci, ledit premier pivot (84) étant relié audit premier ensemble d'escaliers (30, 32, 34) et ledit deuxième pivot (82) étant relié audit deuxième ensemble d'escaliers (36, 38, 40, 42) ;
**caractérisé en ce que** ledit ensemble culbuteur (76) est relié à un ensemble de manivelle (72) entraîné par un moteur (70) ; et
ledit ensemble culbuteur (76) est disposé au-dessous desdits premier (30, 32, 34) et deuxième (36, 38, 40, 42) ensembles d'escaliers à mi-chemin entre ledit emplacement de réception (22) et ledit emplacement de livraison (18), de telle sorte qu'une partie du poids desdits premier (30, 32, 34) et deuxième (36, 38, 40, 42) ensembles d'escaliers soit disposée en avant de la position dudit ensemble culbuteur (76) et que le reste du poids desdits premier (30, 32, 34) et deuxième (36, 38, 40, 42) ensembles d'escaliers soit disposé en arrière de la position dudit ensemble culbuteur (76).

2. Dispositif selon la revendication 1, dans lequel lesdits premier et deuxième pivots (84, 82) sont reliés auxdits premier (30, 32, 34) et deuxième (36, 38, 40, 42) ensembles d'escaliers par l'intermédiaire de première et deuxième tringleries correspondantes, de telle sorte que le poids dudit premier ensemble d'escaliers (30, 32, 34) soit transféré sur ledit premier pivot (84) par l'intermédiaire de ladite première tringlerie, générant un premier moment autour dudit axe central dudit ensemble culbuteur (76), et que le poids dudit deuxième ensemble d'escaliers (36, 38, 40, 42) soit transféré sur ledit deuxième pivot (82) par l'intermédiaire de ladite deuxième tringlerie, générant un deuxième moment autour dudit axe central dans la direction opposée audit premier moment.

3. Dispositif selon l'une quelconque des revendications précédentes, dans lequel ledit ensemble culbuteur (76) est disposé de telle sorte que son axe central soit horizontal et normal à la direction du mouvement desdits premier (30, 32, 34) et deuxième (36, 38, 40, 42) ensembles d'escaliers.

4. Dispositif selon l'une quelconque des revendications précédentes, dans lequel le poids dudit premier ensemble d'escaliers (30, 32, 34) est sensiblement égal au poids dudit deuxième ensemble d'escaliers (36, 38, 40, 42).

5. Dispositif selon l'une quelconque des revendications précédentes, dans lequel chaque escalier comprend des premier (48) et deuxième limons séparés par une pluralité de marches (50), chacune desdites marches (50) étant espacée de sa voisine par une contremarche (52).

6. Dispositif selon la revendication 5, dans lequel lesdites contremarches (52) et lesdites marches (50) sont reliées les unes aux autres.

7. Dispositif selon la revendication 5 ou 6, dans lequel lesdites marches (50) et lesdites contremarches (52) ont une surface plate.

8. Dispositif selon l'une quelconque des revendications 5 à 7, dans lequel lesdites marches (50) et lesdites contremarches (52) sont à niveau avec lesdits limons (48).

9. Dispositif selon l'une quelconque des revendications précédentes, dans lequel lesdits premier et deuxième pivots (84, 82) sont disposés à égale distance dudit axe central dudit ensemble culbuteur (76).

10. Dispositif selon la revendication 9, dans lequel lesdits premier et deuxième pivots (84, 82) et ledit axe central dudit ensemble culbuteur (76) sont colinéaires.

11. Dispositif selon la revendication 10, dans lequel ledit ensemble culbuteur (76) a une position dans laquelle une ligne passant par lesdits premier et deuxième pivots (84, 82) forme un angle droit avec lesdits supports inclinés (64, 66).

12. Dispositif selon l'une quelconque des revendications précédentes, dans lequel lesdits supports inclinés (64, 66) sont des supports coulissants.
